# EUROPEAN PATENT SPECIFICATION

(11) **EP 3 655 224 B1**
(45) Date of publication and mention of the grant of the patent: **13.09.2023**
(21) Application number: 18745675.1
(22) Date of filing: 11.07.2018
(51) Int. Cl.: B29C 45/26, F04C 5/00, B29C 45/00, B29L 31/00, B29C 45/27, B29K 77/00, B29K 105/12

(54) **A ROTARY DIAPHRAGM POSITIVE DISPLACEMENT PUMP**
VERDRÄNGERKREISELMEMBRANPUMPE
POMPE À DÉPLACEMENT POSITIF À MEMBRANE ROTATIVE

(30) Priority: 19.07.2017 GB 201711611
(43) Date of publication of application: 27.05.2020
(73) Proprietor: Charles Austen Pumps Limited, Byfleet West Byfleet Surrey KT14 7NY (GB)
(72) Inventor: SHEPHERD, William Eric, Byfleet Surrey KT14 7NY (GB); FULLER, Robert David, Byfleet Surrey KT14 7NY (GB)
(74) Representative: Boult Wade Tennant LLP
(86) International application number: PCT/GB2018/051971
(87) International publication number: WO 2019/016522

(56) References cited:
- EP-A1- 1 457 300
- EP-A2- 0 053 868
- EP-A2- 0 819 853
- GB-A- 2 037 371
- JP-A- 2009 243 349
- US-A1- 2013 240 528

## Description

The present invention relates to a rotary diaphragm positive displacement pump. Such a pump is disclosed in our own earlier EP0819853.

Such a rotary pump comprises a housing defining an annular chamber with inlet and outlet ports spaced apart around the chamber, a flexible annular diaphragm forming one side of the chamber spaced opposite an annular wall of the housing, the diaphragm being sealed at its edge to the housing, a partition extending across the chamber from a location between the inlet and outlet ports to the diaphragm; wherein the diaphragm is configured to be pressed progressively against the opposite wall of the housing to force fluid drawn in at the inlet port on one side of the partition around the chamber and to expel it at the outlet port at the other side of the partition. Such a rotary pump will subsequently be described as "of the kind described".

In EP0819853, we added a reinforcement ring to the diaphragm in order to add rigidity to a central portion of the diaphragm so that it can cope with higher loads and to prolong the lifetime of the pump.

JP 2009/243349, GB2037371 and EP0053868 provide other examples of pumps with end caps. US 2013/240528 and EP1457300 disclose gating mechanisms for a mould.

The rotary pump has a pair of end caps. These have traditionally been machined as the ring is required to have some very tight tolerances. This is particularly so of the radially outer most face which is required to engage with the diaphragm in order to compress the diaphragm against the outer housing and provide the seal between the edge of the diaphragm and the housing.

We have made a number of attempts to mould this component. However, the problem that we have encountered in the moulding process is that it is very difficult to get a perfectly circular surface. Further, the non-circular nature of the surface is extremely variable between different moulds even when the moulding parameters are not changed.

According to a first aspect of the present invention there is provided a method according to claim 1.

This method takes the apparently counterintuitive step of forming a cap with a critical radially facing surface which is deliberately not intended to be perfectly circular. Instead, it is deliberately engineered with high points and low points at predetermined locations around the circumference of the critical surface. This is achieved by having a number of substantially equally circumferentially spaced gates around the mould. As these inject simultaneously around the mould, the plastic material will generally travel symmetrically away from each of the gates as it fills the cavity as a result of which low points will be formed at locations which are furthest from the gates while high points will be formed at locations adjacent to the gates.

We have appreciated that a non-circular critical surface is perfectly acceptable in a ring for use in a rotary pump as, at the higher points, there is a slightly greater compression of the diaphragm material as compared to the low points. What is important is that these high and low points can be reliably controlled within manufacturing tolerances and that is what makes this method acceptable for the current purpose.

The end cap preferably has a wall thickness that is larger at one end than the other. We have found that positioning the gates at the end of mould corresponding to the smaller wall thickness provides for a more accurate moulding process because the plastic will flow better when injected into a region which expands in the direction away from the gate.

According to a second aspect of the present invention there is provided a rotary pump according to claim 3.

The critical radially facing surface with a radius which varies periodically around the circumference provides the benefits mentioned above in relation to the method. The radius is at a maximum at at least three portions around a circumference of the critical radially facing surface.

The radius of the critical radially facing surface should still be controlled to a reasonable extent such that a radius varies by no more than +/- 0.04 mm and preferably +/- 0.03 mm.

Each end cap is preferably a plastic and is more preferably a hard composite plastic such as glass filled nylon. The end cap for the rotary pump according to the second aspect of the present invention is preferably formed according to a method of the first aspect.

The configuration of the rotary pump is preferably such that the diaphragm does not rotate relative to the housing.

An example of a pump and method in accordance with the present invention will now be described with reference to the accompanying drawings, in which:
Fig. 1 is a cross section of the pump in a plane perpendicular to the axis of rotation which passes through the inlet and outlet ports;
Fig. 2 is an enlarged portion of Fig.1 showing the region adjacent to the outlet port;
Fig. 3 is a cross section in an axial plane which does not pass through the inlet and outlet ports;
Fig 4 shows a detail of the bottom left hand region of Fig 3;
Fig 5 is a side view of the diaphragm;
Fig 6 is an exploded perspective view of the diaphragm;
Fig. 7 is a cross sectional view of an end cap 9 taken through plane VII-VII in Fig. 3 with the variation in thickness of the wall of the end cap is shown in exaggerated form;
Fig. 8 is a plan view of a ring showing the injection point into the mould; and
Fig. 9 is a side view of an end cap.

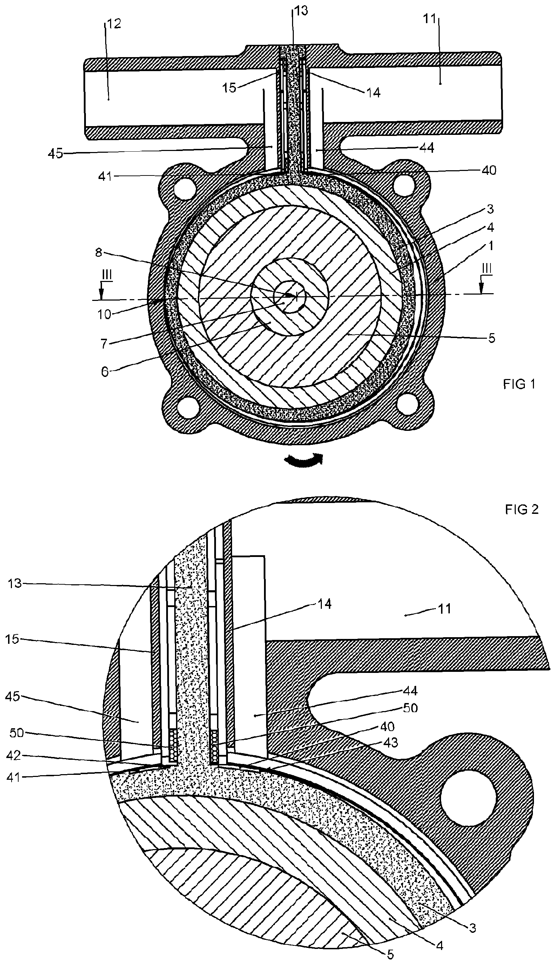

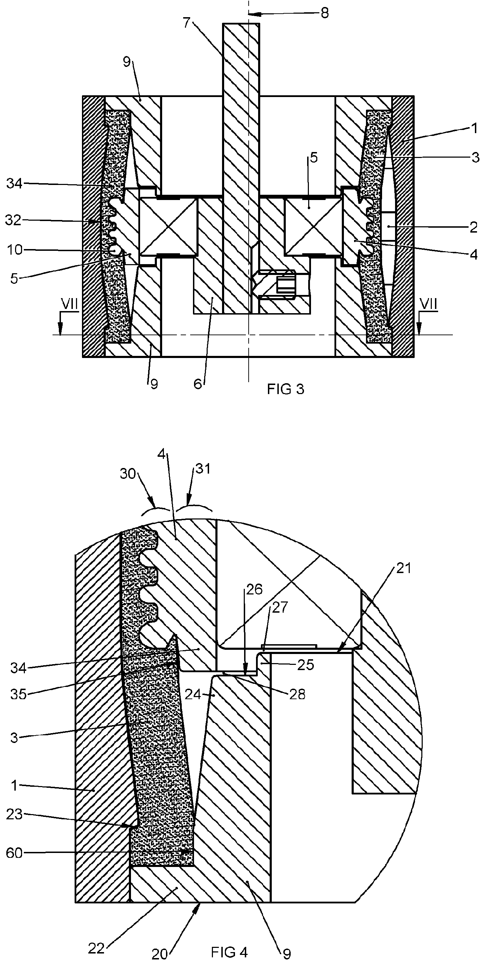

As shown in Figures 1 and 3, a tubular part of a rigid housing 1 has an annular groove 2 running around the inner surface, which acts as the pump chamber. In its relaxed state, a flexible diaphragm 3 lies inside the wall of the housing leaving the groove free to contain the pumped fluid. A rigid reinforcing ring 4 is moulded into the diaphragm and this ring is at all times in intimate contact with an outer surface of a bearing 5 mounted via an eccentric coupling 6 which extends through and is mounted in the housing in bearings (not shown). The shaft 6 is mounted concentrically with the annular groove but eccentrically with regard to the axis 8 of the housing 1 and is powered by a motor (not shown). If the reinforcing ring were not present, the diaphragm would stretch and the performance would be reduced in a similar way to that experienced with peristaltic pumps, when the tubing collapses under vacuum.

As the drive shaft 7 rotates, the bearing 5, reinforcing ring 4 and central portion of the diaphragm 3 all orbit together inside the housing. The two ends of the diaphragm 3 are clamped to the housing 1 by end caps 9, providing an effective and static seal to atmosphere. As the central portion of the diaphragm 3 orbits round inside the groove 2, line contact 10 exists between the diaphragm and the groove providing an abutment which pushes the fluid along towards the outlet port 11 and simultaneously draws fluid in through the inlet port 12. The pump thus provides pressure and suction cycles at the output and intake respectively which are symmetrical and which vary sinusoidally. Since the diaphragm does not rotate relative to the housing, there is minimal sliding action between them and therefore almost no wear.

From Figure 1, it can be seen that another feature of the diaphragm moulding is an elastic partition 13 which prevents communication between the outlet 11 and inlet 12 ports. This is positioned between downwardly depending walls 14, 15 which are part of the housing Since the partition is elastic, it accommodates the reciprocating movement of the diaphragm whilst maintaining a static pressure seal between both ports and atmosphere. In this way, all compliant sealing functions required by the pump are provided by the diaphragm moulding and since none of these are sliding seals, they are not subject to significant wear.

The above description applies equally to the prior art pump of EP0189853. The modifications to the present pump will now be described.

The end caps 9 are best shown in Fig 4. These have a first end 20 at the outermost face of the end cap and a second end 21 at the opposite innermost face. At the first end 20 is a radially outwardly extending flange 22 which, clamps the diaphragm 3 to the housing 1 with the cooperation of an annular flange 23 in the housing 1.

The end cap 9 has a tapered outer face 24 tapering inwardly away from the first end 20. This outer face 24 supports the diaphragm 3 when the diaphragm is in its radially innermost position as shown in the right hand of Fig 3.

At the radially innermost portion of the second end 21 is an annular projection 25. The presence of this projection 25 forms a recess 26 which provides a step reduction in the outer diameter of the end cap 9 in the region adjacent to the second end 21. As can be seen from Fig 4, the second end 21 is spaced from the bearing 5 by a very small amount creating a first gap 27, in this case less than 0.4 mm and preferably 0.25 mm. A second gap 28 is present between the recess 26 and the reinforcing ring 4. Again, this is less than 0.4 mm and preferably 0.25 mm.

As will be apparent from Fig 4, the end cap 9 is located by engagement with the flange 22 against the flexible diaphragm 3. In view of the very small gap referred to above, the flange 22 cannot over compress the diaphragm 3 otherwise the end cap 9 will be abut against the reinforcing ring 4 and bearing 5. This ensures that the end cap 9 at either end of the assembly can be inserted consistently as both end caps will compress the diaphragm 3 to the same limited amount.

The small nature of the second gap 28 also ensures that there is only a very small region of the compressible diaphragm 3 which remains unsupported as the diaphragm 3 is pressed against the end cap 9 (as shown in the right hand side of Fig 3). In this position, the opposite outer face of the diaphragm is receiving the full pressure within the pump chamber and this would tend it extrude the diaphragm material in any unsupported region on the opposite side. The very small nature of this gap 28 significantly limits the potential for extrusion of the diaphragm 3 even when the pressure in the groove 2 is increased.

The reinforcement ring 4 has a modified shape as best shown in Figs. 3 and 4.

This comprises an embedded portion 30 forming the radially outermost portion of ring 4 and a support portion 31 forming the radially inner most portion of the ring 4. The embedded portion 30 has a crenulated configuration in this case consisting of four annular ridges which, in cross section, have a curved configuration which is devoid of sharp corners. This is to avoid any stress concentrations in the ring 4. These crenulations are designed to provide a large surface area within a relatively limited axial region. The diaphragm 3 is formed as an over mould on the ring 4 and the presence of the crenulations maximises the surface area for bonding between the two. The relatively large number of rings 32 combined with their generally curved cross sections effectively spreads the load transmission between the two components thereby avoiding delamination of the two components even under relatively high loads.

The support portion 31 of the ring 4 extends axially beyond the crenulations 32 forming diaphragm support portions 34. These have a radially outwardly facing surface 35 which directly faces an inner face of the diaphragm 3. The diaphragm 3 is not bonded to the face 35. However, in the position in which the diaphragm 3 is furthest from the housing 1, the diaphragm is supported in this region by the face 35.

This feature provides support for the diaphragm at a time when it is under a relatively high inward pressure from the pressure within the pump chamber. As is with the gap 28 mentioned above, this support prevents extrusion of the diaphragm material in this stressed position.

As shown in Figs. 1, 2 and 6, the diaphragm 3 is provided with a trough 40 extended axially across a substantial portion of the diaphragm in the vicinity of the outlet. A similar trough 41 is provided at the inlet. The trough 40 in each case has a first edge 42 adjacent to the partition 13 and a second edge 43 opposite to the first edge. The troughs 40, 41 are aligned with a respective outlet duct 44 and inlet duct 45 which lead to the outlet port 11 and from the inlet port 12 respectively.

In the absence of these troughs 40, 41 when the diaphragm 3 is in the uppermost position, it is possible that while under high pressure, the diaphragm material will extrude into the port to a limited extent thereby causing damage to the diaphragm over time. The presence of the troughs 40, 41 reduces or eliminates this effect. However, trough terminates at edge 43 which is adjacent to the edge of duct 44 so that the full thickness of the diaphragm is available immediately downstream of the edge 43. This means that the diaphragm is able to fully engage with the inlet duct 44 as the diaphragm reaches the top of its travel thereby ensuring that the point contact 10 is maintained up until the outlet duct 44 in order to expel the liquid. A similar geometry is provided for the inlet duct 45.

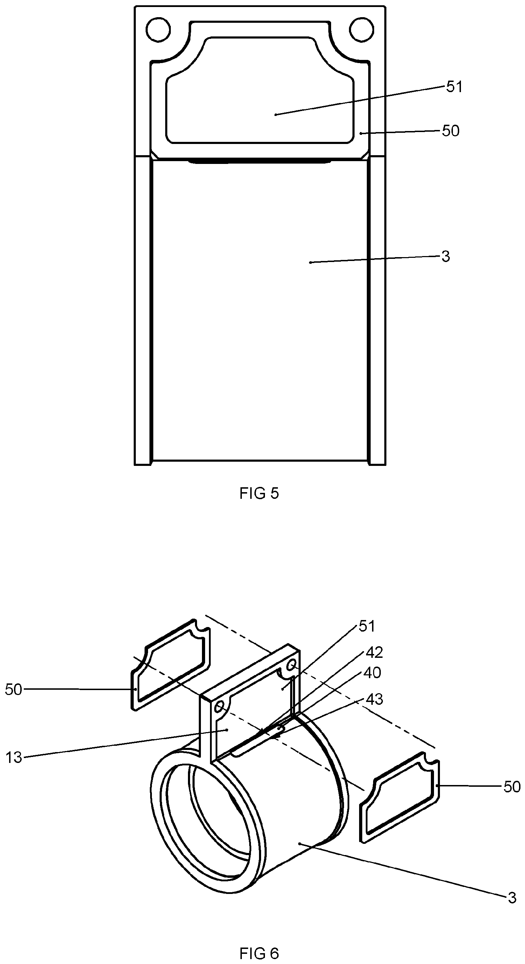

Reinforcing members 50 are best shown in Figs. 2, 5 and 6. Although two such reinforcing members 50 are shown in Fig. 6, only one of these need be present in practice. This would depend upon the direction in which the partition 13 is loaded in use.

The reinforcing member 50 comprises a frame of material which is harder than the material of the partition and therefore more resistant to deflection under pressure. This is shaped to fit in a shallow recess 51 in the side of the partition. It is preferably a press fit but maybe, more securely attached if the application requires it. As shown best in Figure 6, the geometry of the reinforcing member 50 is such that it may be considered as a reinforcing plate, whose thickness is much smaller than its length/width.

With reference to Fig. 2, as the diaphragm orbits to pump the fluid around the chamber, the partition 13 deflects to some extent in order to accommodate this orbital movement. In addition, the pressure of the fluid in the inlet 12 or outlet 11 will also act to deflect the partition. Under higher pressure loads, this can cause the softer material of the diaphragm to contact the walls 14, 15 thereby wearing the diaphragm material, particularly at the bottom edge of the walls 14, 15 which can dig into the diaphragm 3 material.

As can be seen from Fig. 2, the reinforcing member 50 is positioned in the vicinity of the bottom edge of the walls 14, 15 such that any contact will be between two harder surfaces thereby protecting the diaphragm material from wear.

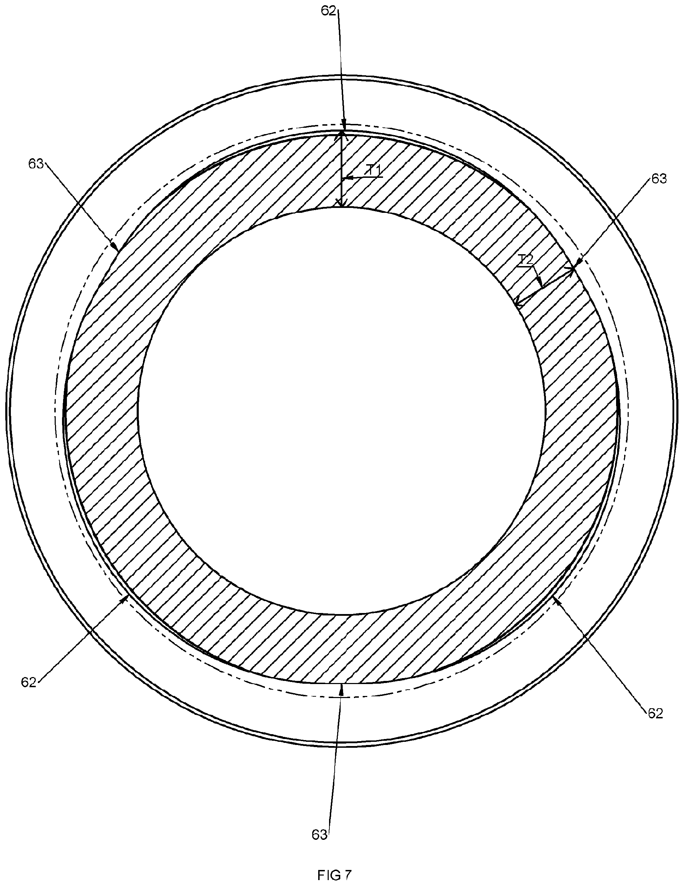

The manner in which an end cap 9 is formed will now be described with particular reference to Figs. 7 to 9.

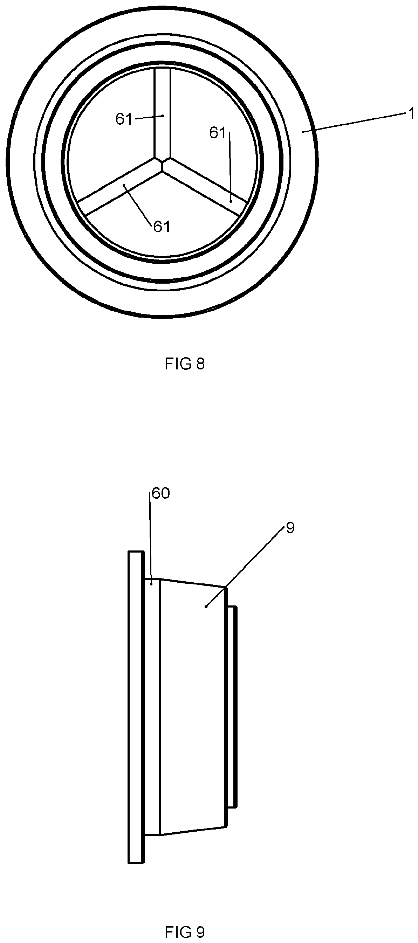

As shown in Fig. 9, the end cap 9 has a critical radially facing surface 60. This is defined as the critical surface as it is the one which requires the tightest tolerance. As can be seen from Fig. 4, this surface 60 faces the housing 1 and compresses the diaphragm 3 between the ring 9 and the housing 1. As such, it is important that this surface is carefully controlled as, if it is not, the primary seal at the edge of the diaphragm will be compromised. Previously, therefore, this component has been machined as this has, to date, been the only way in which we can obtain the necessary tolerance.

However, we have now developed a moulding process in which there are three gates 61 as shown in Fig. 8 which are spaced equally around the circumference of the ring and are configured to inject plastic at the second end 21, and more particularly in the vicinity of the projection 25. As will be appreciated from Fig. 4, the plastic is being injected at the narrowest part of the ring and will therefore expand into the mould at it flows towards the larger first end 20 and the flange 22. By injecting the plastic at three equally spaced regions, the critical surface 60 is deliberately created to have three high points 62 (where the thickness T1 is locally increased) as shown in Fig. 7 which are formed at locations directly beneath the gates 61 and three low points 63 (where the thickness T2 is locally reduced) which correspond to the regions furthest from the gates 61 as these are the regions that the plastic reaches last. Although the critical radially facing surface 60 is not perfectly circular, the location of the high points 62 and low points 63 is controlled with a reasonably high degree of precision. This technique of injecting plastic at equal locations in order to form carefully controlled high points and low points has been found to be highly reproducible. In practice the diaphragm 3 is compressed to a slightly greater extent in the vicinity of the high points 62 than it is in the vicinity of the low points 63 but, as these high points and low points can be accurately defined and controlled this is acceptable. Thus, this represents a moulding technique which has been found to be acceptable for a method of moulding an end cap for a use in a rotary pump. By moulding the rings rather than machining them as previously, the cost of manufacturing the rings as well as the logistics of manufacturing the rings and assembling the pumps is greatly reduced.

## Claims

1. A method of manufacturing a plastic end cap (9) for use in a rotary pump, wherein the plastic end cap comprises a central axis and an annular wall defining a first end, a second end opposite the first end, and a critical radially facing surface (60) extending at least part way between the first and second ends, **characterized in that** the end cap is formed in a mould defining a cavity and comprises at least three substantially equally circumferentially spaced gates (61) each for injecting plastic in the cavity, wherein the method comprises the step of:
simultaneously injecting plastic at the gates (61) to fill the cavity such that the critical surface (60) is formed with high points (62) and low points (63) at predetermined locations around the circumference of the finished critical surface.

2. A method of moulding a plastic end cap according to claim 1, wherein the end cap (9) has a wall thickness that is larger at one end than the other and the gates (61) are positioned at the end of the mould corresponding to the smaller wall thickness.

3. A rotary pump comprising:
a housing (1) defining an annular chamber (2) with inlet (12) and outlet (11) ports spaced apart around the chamber, a flexible annular diaphragm (3) forming one side of the chamber spaced opposite an annular wall of the housing and having two opposed circular ends, the diaphragm being sealed at its edges to the housing, a partition (13) extending across the chamber from a location between the inlet and outlet ports to the diaphragm;
wherein the diaphragm (3) comprises an outer surface which engages the annular wall of the housing, and an inner surface opposite the first surface, wherein the outer surface is configured to be pressed progressively against the opposite wall of the housing, by a rotating means (7), to force fluid drawn in at the inlet port on one side of the partition around the chamber and to expel it at the outlet port at the other side of the partition;
a reinforcement ring (4) surrounding the rotating means and connected to a central region of the diaphragm;
a pair of annular end caps (9), one in each end of the diaphragm, each end cap having a first end adjacent to a respective end of the diaphragm and a second end opposite to the first end, and a critical radially facing surface (60) extending at least part way between the first and second ends, the critical radially facing surface engaging with the inner surface of the diaphragm, **characterized in that** the critical radially facing surface (60) has a radius which varies periodically around the circumference;wherein the radius is at a maximum (62) at least three positions around the circumference of the critical radially facing surface (60).

4. A rotary pump according to claim 3, wherein the radius of the critical radially facing surface (60) varies by no more than +/- 0.04 mm.

5. A rotary pump according to any of claims 3 to 4, wherein the each end cap (9) is a plastic.

6. A rotary pump according to claim 5, wherein the plastic is glass filled nylon (RTM).

7. A rotary pump according to claim 5, wherein the end caps (9) are formed according to the method of claim 1 or claim 2.

## Patentansprüche

1. Verfahren zur Herstellung einer Kunststoff-Endkappe (9) zur Verwendung in einer Kreiselpumpe, wobei
die Kunststoff-Endkappe eine zentrale Achse und eine ringförmige Wand umfasst, die ein erstes Ende, ein zweites Ende gegenüber dem ersten Ende, und eine kritische radial zugewandte Fläche (60), die sich wenigstens teilweise zwischen dem ersten und dem zweiten Ende erstreckt, definiert,
**dadurch gekennzeichnet, dass**
die Endkappe in einer Form gebildet wird, die einen Hohlraum definiert, und wenigstens drei im Wesentlichen gleichmäßig umlaufend beabstandete Anschnitte (61) jeweils zum Einspritzen von Kunststoff in den Hohlraum umfasst, das Verfahren umfassend den Schritt des:
gleichzeitigen Einspritzens von Kunststoff an den Anschnitten (61), um den Hohlraum zu füllen, so dass die kritische Fläche (60) mit hohen Punkten (62) und niedrigen Punkten (63) an vorgegebenen Positionen um den Umfang der fertigen kritischen Fläche gebildet wird.

2. Verfahren zum Formen einer Kunststoff-Endkappe nach Anspruch 1, wobei die Endkappe (9) eine Wandstärke aufweist, die größer an einem Ende als am anderen ist, und die Anschnitte (61) an dem Ende der Form positioniert sind, das der kleineren Wandstärke entspricht.

3. Kreiselpumpe, umfassend:
ein Gehäuse (1), das eine ringförmige Kammer (2) mit einer Einlassöffnung (12) und einer Auslassöffnung (11), die um die Kammer beabstandet sind, eine flexible ringförmige Membran (3), die eine Seite der Kammer bildet, die gegenüber einer ringförmigen Wand des Gehäuses beabstandet ist, und zwei gegenüberliegende kreisförmige Enden aufweist, wobei die Membran an ihren Kanten mit dem Gehäuse abgedichtet ist, eine Abtrennung (13), die sich über die Kammer von einer Stelle zwischen der Einlassöffnung und der Auslassöffnung zur Membran erstreckt, definiert;
wobei die Membran (3) eine Außenfläche umfasst, die die ringförmige Wand des Gehäuses in Eingriff nimmt, und eine Innenfläche gegenüber der ersten Fläche, wobei die Außenfläche ausgestaltet ist, schrittweise gegen die gegenüberliegende Wand des Gehäuses gedrückt zu werden, durch ein Drehmittel (7), um ein Fluid, das an der Einlassöffnung auf einer Seite der Trennwand eingesogen wird, um die Kammer zu treiben und es an der Auslassöffnung auf der anderen Seite der Trennwand auszustoßen;
einen Verstärkungsring (4), der das Drehmittel umgibt und mit einem zentralen Bereich der Membran verbunden ist;
ein Paar ringförmiger Endkappen (9), eine in jedem Ende der Membran, wobei jede Endkappe ein erstes Ende angrenzend an ein entsprechendes Ende der Membran und ein zweites Ende gegenüber dem ersten Ende aufweist, und eine kritische radial zugewandte Fläche (60), die sich wenigstens teilweise zwischen dem ersten und dem zweiten Ende erstreckt, wobei die kritische radial zugewandte Fläche mit der Innenfläche der Membran in Eingriff ist,
**dadurch gekennzeichnet, dass** die kritische radial zugewandte Fläche (60) einen Radius aufweist, der periodisch um den Umfang variiert; wobei der Radius an einem Maximum (62) an wenigstens drei Positionen um den Umfang der kritischen radial zugewandten Fläche (60) ist.

4. Kreiselpumpe nach Anspruch 3, wobei der Radius der kritischen radial zugewandten Fläche (60) um nicht mehr als +/- 0,04 mm variiert.

5. Kreiselpumpe nach einem der Ansprüche 3 bis 4, wobei jede Endkappe (9) ein Kunststoff ist.

6. Kreiselpumpe nach Anspruch 5, wobei der Kunststoff glasfasergefülltes Nylon (RTM) ist.

7. Kreiselpumpe nach Anspruch 5, wobei die Endkappen (9) gemäß dem Verfahren nach Anspruch 1 oder Anspruch 2 gebildet sind.

## Revendications

1. Procédé de fabrication d'un capuchon d'extrémité en plastique (9) destiné à être utilisé dans une pompe rotative, dans lequel le capuchon d'extrémité en plastique comprend un axe central et une paroi annulaire définissant une première extrémité, une deuxième extrémité opposée à la première extrémité, et une surface critique orientée radialement (60) s'étendant au moins en partie entre les première et deuxième extrémités,
**caractérisé en ce que**
le capuchon d'extrémité est formé dans un moule définissant une cavité et comprend au moins trois portes (61) espacées de manière sensiblement égale sur la circonférence, chacune pour injecter du plastique dans la cavité, dans lequel le procédé comprend l'étape consistant à :
injecter simultanément du plastique au niveau des portes (61) pour remplir la cavité de sorte que la surface critique (60) soit formée avec des points hauts (62) et des points bas (63) à des emplacements prédéterminés autour de la circonférence de la surface critique finie.

2. Procédé de moulage d'un capuchon d'extrémité en plastique selon la revendication 1, dans lequel le capuchon d'extrémité (9) a une épaisseur de paroi qui est plus grande au niveau d'une extrémité qu'au niveau de l'autre et les portes (61) sont positionnées au niveau de l'extrémité du moule correspondant à la plus petite épaisseur de paroi.

3. Pompe rotative comprenant :
un carter (1) définissant une chambre annulaire (2) avec des orifices d'entrée (12) et de sortie (11) espacés autour de la chambre, un diaphragme annulaire flexible (3) formant un côté de la chambre espacé à l'opposé d'une paroi annulaire du carter et ayant deux extrémités circulaires opposées, le diaphragme étant scellé au niveau de ses bords au carter, une cloison (13) s'étendant à travers la chambre depuis un emplacement entre les orifices d'entrée et de sortie vers le diaphragme ;
dans laquelle le diaphragme (3) comprend une surface externe qui s'engage avec la paroi annulaire du carter, et une surface interne opposée à la première surface, dans laquelle la surface externe est configurée pour être pressée progressivement contre la paroi opposée du carter, par un moyen de rotation (7), pour forcer un fluide aspiré au niveau de l'orifice d'entrée d'un côté de la cloison autour de la chambre et pour l'expulser au niveau de l'orifice de sortie de l'autre côté de la cloison ;
une bague de renforcement (4) entourant le moyen de rotation et reliée à une région centrale du diaphragme ;
une paire de capuchons d'extrémité annulaires (9), un à chaque extrémité du diaphragme, chaque capuchon d'extrémité ayant une première extrémité adjacente à une extrémité respective du diaphragme et une deuxième extrémité opposée à la première extrémité, et une surface critique orientée radialement (60) s'étendant au moins en partie entre les première et deuxième extrémités, la surface critique orientée radialement s'engageant avec la surface interne du diaphragme, **caractérisée en ce que** la surface critique orientée radialement (60) a un rayon qui varie périodiquement autour de la circonférence ; dans laquelle le rayon est à un maximum (62) d'au moins trois positions autour de la circonférence de la surface critique orientée radialement (60).

4. Pompe rotative selon la revendication 3, dans laquelle le rayon de la surface critique orientée radialement (60) ne varie pas de plus de +/- 0,04 mm.

5. Pompe rotative selon l'une des revendications 3 et 4, dans laquelle chaque capuchon d'extrémité (9) est en plastique.

6. Pompe rotative selon la revendication 5, dans laquelle le plastique est du nylon chargé de verre (RTM).

7. Pompe rotative selon la revendication 5, dans laquelle les capuchons d'extrémité (9) sont formés selon le procédé de la revendication 1 ou 2.
